# EUROPÄISCHE PATENTSCHRIFT

(11) **EP 2 878 280 B1**
(45) Veröffentlichungstag und Bekanntmachung des Hinweises auf die Patenterteilung: **08.05.2019**
(21) Anmeldenummer: 14194928.9
(22) Anmeldetag: 26.11.2014
(51) Int. Cl.: A61C 8/00

(54) **Dentalimplantatsystem mit einem Keramikimplantat**
Dental implant system with a ceramic implant
Système d'implant dentaire doté d'un implant céramique

(30) Priorität: 27.11.2013 CH 19742013
(43) Veröffentlichungstag der Anmeldung: 03.06.2015
(73) Patentinhaber: Z-Systems AG, 4702 Oensingen (CH)
(72) Erfinder: Staudenmann, Roger, 3292 3292 Busswil b. Büren (CH); Hug, Thomas, 8703 Erlenbach (CH); Thomke, Ernst, 2540 Grenchen (CH); Di Girolamo, Rubino, 6315 Oberägeri (CH)
(74) Vertreter: Frei Patent Attorneys

(56) Entgegenhaltungen:
- EP-A2- 2 030 320
- WO-A2-2011/036268
- CH-A1- 702 350
- DE-A1- 10 340 059
- DE-A1-102011 015 299
- DE-U1-202006 013 585
- DE-U1-202006 016 557
- FR-A1- 2 863 478

## Beschreibung

Die Erfindung liegt auf dem Gebiet der Zahnmedizin und betrifft ein Dentalimplantatsystem aufweisend ein Keramikimplantat und ein Abutment.

Viele der üblichen Dentalimplantatsysteme sind mehrteilig und enthalten ein im Knochen verankertes Implantat und ein Abutment, auf welchem ein Aufbauelement wie beispielsweise eine Krone oder eine Brücke befestigt wird. Mehrteilige Dentalimplantatsysteme mit einem Implantat und Abutment werden oft auch unabhängig von weiteren Komponenten als zweiteilige Implantatsysteme bezeichnet. Zweiteilige Dentalimplantatsysteme zeichnen sich durch besonders vielfältige Einsatzmöglichkeiten in der Zahnprothetik aus. Im Allgemeinen wird nachdem das Implantat eines zweiteiligen Implantatsystems im Knochen verankert wurde, die Einheilung des Implantates im Knochen abgewartet. Nach der Einheilungsphase wird das Abutment am Implantat befestigt.

Manche übliche Dentalimplantatsysteme werden aus Keramik hergestellt, insbesondere weil Keramik eine ausserordentlich gute Biokompatibilität aufweist und weil mit Keramikimplantaten besonders gute ästhetische Resultate erhalten werden. Keramische Werkstoffe sind jedoch sprödhart, weshalb die Bruchanfälligkeit von Keramikimplantaten im Vergleich zu aus duktilen metallischen Werkstoffen hergestellten Implantaten erhöht ist. Zweiteilige Keramikimplantate sind im Vergleich zu einteiligen Keramikimplantaten noch bruchanfälliger, werden jedoch wegen ihrer vielseitigen Anwendbarkeit oft bevorzugt. Ein zweiteiliges Keramikimplantat, welches eine besonders bruchresistente Verbindung zwischen Keramikimplantat und Abutment offenbart, ist beispielsweise beschrieben in CH 707 568.

Nachteilig sind zudem die aufwändigeren Herstellungsverfahren von Keramikimplantatsystemen im Vergleich zu beispielsweise Implantatsystemen aus Titan oder Titanlegierungen. Insbesondere die Bearbeitung der Keramikrohlinge, welche erforderlich ist, um Keramikimplantatteile mit den gewünschten Innen- und Aussenstrukturen auszurüsten, ist zeit- und kostenintensiv. Wegen der sprödharten Eigenschaften kann Keramikmaterial beispielsweise nicht gestanzt oder gedreht werden. Üblicherweise werden zur Herstellung von Konturen auf Keramikteilen aufwändige Schleifverfahren eingesetzt wie beispielsweise in EP 2'072'020 beschrieben. Die Herstellung von filigranen Innenstrukturen mit Schleifverfahren ist besonders zeitaufwändig. In EP 2 712 574 ist ein Herstellungsverfahren für Innenstrukturen von Keramikimplantatteilen beschrieben, welches sich insbesondere für die Herstellung von Eindrehgeometrien eignet.

DE 103 40 059, WO 2011/036268, DE 20 2006 013 585 U, DE 10 2001 015 299, DE 20 2006 016 557 U, und CH 702 350 zeigen je ein Dentalimplantatsystem mit einem keramischen Implantat, bei welchem eine Abutmentschraube in ein Einsetzteil eingeschraubt wird, welches durch Kleben, einen Kraftschluss und/oder einen Formschluss im Implantat verankert wird. Bei der Verankerung des Einsetzteils und bei der Fixierung des Abutments relativ zum Implantat ergeben sich praktische Probleme.

Aufgabe der Erfindung ist es, ein im Vergleich zum Stand der Technik verbessertes Dentalimplantatsystem mit einem Keramikimplantat und einem Abutment bereitzustellen, welches Nachteile von bekannten Dentalimplantatsystemen aus keramischen Material überwindet.

Diese Aufgabe wird gelöst durch ein Dentalimplantatsystem, ein Keramikimplantat und ein Abutment, wie sie in den unabhängigen Patentansprüchen definiert sind. Die abhängigen Ansprüche beanspruchen weitere Ausführungsformen.

Das erfindungsgemässe Dentalimplantatsystem ist ein zweitteiliges Dentalimplantatsystem mit einem Keramikimplantat und einem Abutment und enthält zudem ein Einsatzelement für das Keramikimplantat. Das Einsatzelement ist entweder im Wesentlichen aus nicht-keramischem Material gefertigt, das heisst es besteht vollständig oder im Wesentlichen aus nicht-keramischen Material, oder, alternativ, ist das Einsatzelement aus Spritzgusskeramik gefertigt und besteht aus Spritzgusskeramikmaterial. Das Einsatzelement ist passend für eine Ausnehmung, welche sich in einem proximalen Bereich des Keramikimplantates öffnet und in welche das Einsatzelement eingesetzt oder einsetzbar ist. Die proximale Öffnung der Ausnehmung ist von der proximalen Seite her zugänglich auch wenn das Implantat bereits im Knochen implantiert ist. Das Einsatzelement dient der Befestigung des Abutments und ist dafür mit Befestigungsstrukturen ausgerüstet. Das erfindungsgemässe Dentalimplantatsystem zeichnet sich im Wesentlichen dadurch aus, dass das in der Ausnehmung des Keramikimplantates eingesetzte Einsatzelement, mittels einer gegenüber axialem Zug kraftschlüssigen und/ oder formschlüssigen Verbindung mit dem Keramikimplantat verbindbar oder verbunden ist. Somit ist das Einsatzelement klebstofffrei in der Ausnehmung mit dem Keramikimplantat verbindbar oder verbunden.

Der Begriff Dentalimplantatsystem wird für diesen Text definiert als ein zweiteiliges Implantatsystem mit einem Keramikimplantat und einem Abutment. Das Attribut "zweiteilig" bezieht sich also auf das Vorhandensein eines in den Knochen implantierbaren Keramikimplantates und eines am Keramikimplantat befestigbaren Abutments. Zusätzlich zu diesen zwei Teilen enthält das Dentalimplantatsystem das Einsatzelement und es kann darüber hinaus noch weitere Teile enthalten. Im verbundenen Zustand des zweiteiligen Dentalimplantatsystems ist das Abutment indirekt am Keramikimplantat befestigt, indem das Abutment am Einsatzelement und das Einsatzelement am Keramikimplantat befestigt ist. Das Keramikimplantat des zweitteiligen Implantatsystems wird im Knochen verankert. Das Abutment wird nach seiner Befestigung am Implantat im Wesentlichen von gingivalem Gewebe umwachsen. Am Abutment wird im Allgemeinen ein Aufbauelement wie beispielsweise eine Krone oder eine Brücke befestigt.

Das Keramikimplantat ist im Wesentlichen aus keramischem Material hergestellt. In manchen Ausführungsformen besteht das Keramikimplantat ausschliesslich aus keramischem Material. Im Allgemeinen wird in diesem Text deshalb der Begriff Keramikimplantat verwendet, verkürzt kann das Keramikimplantat in diesem Text auch einfach als Implantat bezeichnet werden. Die Ausnehmung im proximalen Bereich des Keramikimplantates ist als Sackloch mit einer Öffnung in der proximalen Stirnseite des Keramikimplantates ausgebildet. Das Einsatzelement ist in diese Ausnehmung einsetzbar oder ist in der Ausnehmung eingesetzt. Der axiale Bereich der Ausnehmung, in welchem das eingesetzte Einsatzelement angeordnet ist, wird als Einsatzabschnitt der Ausnehmung bezeichnet.

Das Abutment kann aus Keramikmaterial bestehen oder auch andere Materialien enthalten oder auch aus nicht keramischen Materialien gefertigt sein.

Das Einsatzelement ist entweder aus einem Material gefertigt, welches im Gegensatz zu sprödhartem Keramikmaterial leicht zu bearbeiten ist, wie beispielsweise ein Material der Stoffklasse der Metalle oder metallischen Legierungen wie Stahl, Titanlegierungen oder beispielsweise der Kunststoffe insbesondere der Hochleistungskunststoffe wie PEEK (PolyEtherEtherKeton), PPSU (PolyPhenylenSulfon) oder andere biomedizinische Hochleistungspolymere. In manchen Ausführungsformen enthält das Einsatzelement ein elastisches Material, beispielsweise ein Formgedächtnismaterial wie beispielsweise Nitinol.

Oder das Einsatzelement ist aus Spritzgusskeramik gefertigt. Es kann aus Spritzgusskeramik bestehen oder Spritzgusskeramik und anderes Material enthalten. Spritzgusskeramik vereint in sich die bekannten Vorteile des keramischen Materials betreffend Biokompatibilität und Ästhetik und den zusätzlichen Vorteil der einfacheren Herstellbarkeit von filigranen Strukturen im Spritzgussverfahren. Ein Keramikimplantat mit einem geklebten Einsatzelement, das aus Spritzgusskeramik herstellbar ist, ist im Stand der Technik in EP 2 039 320 beschrieben.

Das Einsatzelement ist derartig geformt, dass es in die Ausnehmung des Keramikimplantates einsetzbar ist und im eingesetzten Zustand vollständig in der Ausnehmung versenkt ist.

Die axiale Positionierung eines axialen Abschnitts, Bereiches oder einer Struktur oder dergleichen wird in dieser Anmeldung mit den Begriffen distal und proximal bezogen auf die Implantationsrichtung so charakterisiert, dass die distale Richtung der Richtung zum apikalen Ende des Zahnimplantates (oder eines Zahns) entspricht und die proximale Richtung der koronalen Richtung des Zahnimplantates (oder eines Zahns) entspricht.

Das Einsatzelement ragt nicht über die Stirnfläche des Keramikimplantates hinaus, sondern ist in distaler Richtung zur axialen Höhe der Stirnfläche des Keramikimplantates beabstandet. Daher weist die Ausnehmung des Keramikimplantates zwischen der axialen Höhe der proximalen Stirnfläche und dem Einsatzabschnitt einen proximaler Abschnitt der Ausnehmung auf.

In manchen Ausführungsformen weist die Ausnehmung des Keramikimplantates zusätzlich und distal zum Einsatzabschnitt einen distalen Endabschnitt auf.

Die Ausnehmung bildet einen Hohlraum mit einer Oberfläche, die im Inneren des Keramikimplantates angeordnet ist. Der Hohlraum ist in verschiedenen axialen Bereichen der Ausnehmung unterschiedlich ausgestaltet. Er weist einen Einsatzabschnitt auf, welcher sich gegen distal konisch erweitert oder einen sich in distaler Richtung konisch erweiternden Teilabschnitt aufweist und durch diesen Hinterschnitt eine Verbindung zwischen dem Einsatzelement und dem Keramikimplantat gegenüber axialem Zug bewirkt. Die Ausnehmung weist proximal des Einsatzbereichs einen proximalen Abschnitt mit Strukturen auf, welche mit einem distalen Bereich des Abutments zur Verdrehsicherung des am Keramikimplantat befestigten Abutments zusammenwirken.

In manchen beispielhaften Ausführungsformen des Keramikimplantates erweitert sich der proximale Abschnitt der Ausnehmung konisch in proximaler Richtung. In manchen Ausführungsformen des Keramikimplantates unterscheiden sich die Querschnittsflächen der Ausnehmung des proximalen Abschnitts und des Einsatzabschnittes beispielsweise in Bezug auf den Flächeninhalt und/oder in Bezug auf die Aussenkonturen der Querschnittsflächen. Beispielsweise sind in manchen Ausführungsformen die Querschnittsfläche im Einsatzabschnitt kreisförmig, während die Querschnittsfläche im proximalen Abschnitt nicht kreisförmig ist, sondern beispielsweise ein Vieleck, insbesondere ein regelmässiges Vieleck, oder beispielsweise ein Gleichdick eines regel- oder unregelmässigen Vielecks ist.

In manchen Ausführungsformen des Dentalimplantatsystems mit einem proximalen Abschnitt der Ausnehmung des Keramikimplantates ist dieser als ein sich in proximaler Richtung erweiternder Innenkonus ausgebildet. In manchen Ausführungsformen ist der Innenkonus im proximalen Abschnitt der Ausnehmung derart passgenau auf einen Aussenkonus in einem distalen Bereich des Abutments abgestimmt, dass dieser distale Bereich durch das Eindrehen des Abutments im proximalen Abschnitt der Ausnehmung reibschlüssig (kraftschlüssig) wie ein Morsekonus mit dem Keramikimplantat verbunden wird. Vorteilhafterweise bewirkt eine solche Reib-Kraftschlussverbindung des Abutments mit dem Keramikimplantat, dass auf das Abutment einwirkende Kräfte verteilt über eine vergleichsweise grosse Kontaktfläche auf das Keramikimplantat übertragen werden. Dies verringert die durch Krafteinwirkungen entstehenden Spannungen im Verbindungsbereich des zweiteiligen Keramikimplantatsystems, was dessen Bruchanfälligkeit vermindert.

Das erfindungsgemässe Dentalimplantatsystem zeichnet sich im verbundenen Zustand durch eine gegenüber axialem Zug formschlüssige Verbindung des Einsatzelementes in der Ausnehmung des Keramikimplantates mit dem Keramikimplantat aus.

In der gegenüber axialem Zug formschlüssigen Verbindung verhindert die Ausnehmung durch die Verengung des Durchmessers, dass das in den Einsatzabschnitt eingesetzte Einsatzelement aus der Ausnehmung herausziehbar ist. In der formschlüssigen Verbindung ist dem Einsatzelement der Weg in axialer, proximaler Richtung versperrt. Eine gegenüber axialem Zug formschlüssige Verbindung bedeutet also, dass die Ausnehmung einen Hinterschnitt aufweist, durch welchen das Einsatzelement im Keramikimplantat in der Ausnehmung festsitzt. Das Einsatzelement ist nur aus der hinterschnittenen Ausnehmung des Keramikimplantats herausziehbar, wenn die Zugkraft so gross ist, dass sie einen Materialbruch bewirkt.

Im verbundenen Zustand ist das Dentalimplantatsystem durch den Formschluss und in manchen Ausführungsformen sowohl durch einen Kraftschluss als auch durch einen Formschluss in der Ausnehmung mit dem Keramikimplantat verbunden.

Es ist ein grosser Vorteil des erfindungsgemässen Dentalimplantatsystems, dass das Einsatzelement entweder aus einem Material wie Metall oder Kunststoff oder aus Spritzgusskeramik herstellbar ist. Mit diesen Materialien sind komplexe und feine Strukturen technisch wesentlich einfach herstellbar. Deshalb wird durch die Verwendung des erfindungsgemässen Einsatzelementes der andernfalls besonders grosse Zeit- und Kostenaufwand für die Herstellung von Befestigungsstrukturen zur Verbindung von Keramikimplantat und Abutment wesentlich reduziert. Somit sind die Herstellungskosten für das erfindungsgemässe zweiteilige Dentalimplantatsystem deutlich tiefer als die Herstellungskosten eines herkömmlichen zweiteiligen Dentalimplantatsystems aus Keramikmaterial.

Demgegenüber ist die technische Ausgestaltung des Einsatzabschnittes der Ausnehmung des Keramikimplantates vergleichsweise einfach und kostengünstig. Dafür sind keine aufwändigen Innenstrukturen erforderlich. Für den Formschluss - wobei ein gleichzeitiger Kraftschluss mit dem Einsatzelement vorgesehen ist oder nicht vorgesehen ist - ist der Einsatzabschnitt hinterschnitten und ist als ein sich in distaler Richtung erweiternder konischer Einsatzabschnitt ausgebildet und kann mit einer abgewinkelten zylindrischen oder einer konischen Schleifscheibe hergestellt werden.

Ein weiterer Vorteil des erfindungsgemässen zweiteiligen Keramikimplantatsystems ist, dass die Verbindungen des Abutments mit dem Einsatzelement und des Einsatzelementes mit dem Keramikimplantat klebstofffrei sind. Die Verwendung von Klebstoff in zweiteiligen Implantatsystemen ist mit verschiedenen Nachteilen verbunden, nicht nur die beschränkte Haftung sondern insbesondere auch das Problem der nachlassenden Klebhaftung über Zeit und die Erfüllung der behördlichen Zulassungsbedingungen für ein zusätzliches Material sind Nachteile, welche das erfindungsgemässe Dentalimplantatsystem überwindet.

Ein weiterer Vorteil ist, dass das Einsatzelement, falls es aus nicht keramischem Material, beispielsweise aus metallischem Material besteht, im verbundenen Zustand des Implantatsystems vollständig vom Keramikmaterial umgeben und vom Körpergewebe vollständig abgeschirmt oder abschirmbar ist. Denn in Ausführungsformen, in welchen das Einsatzelement im verbundenen Zustand des Dentalimplantatsystems vollständig im Implantat versenkt ist, ist das Körpergewebe nur gegenüber der keramischen Aussenseite des Keramikimplantates exponiert. So bleiben dem Dentalimplantatsystem die hervorragenden Eigenschaften von Keramikimplantatsystemen bezüglich Biokompatibilität und Aesthetik erhalten bleiben. Auch bei Ausführungsformen, in welchen das Einsatzelement nicht vollständig vom Keramikimplantat umgeben ist und beispielsweise über die proximale Stirnfläche des Keramikimplantates ist das Abutment entsprechend ohne Weiteres so wählbar, dass der hinausragende Teil des Einsatzelementes vom Abutment abgedeckt wird.

In manchen Ausführungsformen des Dentalimplantatsystems ist das Einsatzelement hülsenförmig und weist zusätzlich zu einer äusseren Oberfläche des Einsatzelementes eine innere Oberfläche des Einsatzelementes auf. In manchen hülsenförmigen Einsatzelementen ist die innere Oberfläche der Hülse mit einem Gewinde oder mit anderen Strukturen zur Befestigung des Abutments am Einsatzelement ausgerüstet.

In manchen Ausführungsformen des Dentalimplantatsystems ist das Einsatzelement spreizbar, hülsenförmig und mit einem Innengewinde ausgerüstet. So kann das Abutment am Einsatzelement mit einer Abutmentschraube oder mit einem Aussengewinde, im distalen Bereich des Abutments befestigt werden.

In manchen Ausführungsformen ist das Einsatzelement aus einem elastischen oder superelastischen Material ausgebildet. In manchen dieser Ausführungsformen ist das elastische oder superelastische Material ein Formgedächtnismaterial aus einer Metalllegierung, wobei das Einsatzelement aus Formgedächtnismaterial hergestellt wird und zunächst locker in die Ausnehmung des Keramikimplantates einsetzbar ist. Erst nach einer Phasenumwandlung des Formgedächtnismaterials durch Veränderung der Temperatur oder durch Anwendung einer mechanischen Spannung wird das Einsatzelement gespreizt und entsteht die kraftschlüssige Verbindung zwischen Einsatzelement und Keramikimplantat. In manchen Ausführungsformen ist das elastische oder superelastische Material ein Kunststoff. In Ausführungsformen eines spreizbaren Einsatzelementes, welches Formgedächtnismaterial enthält, kann statt einer Kraft die Spreizung auch durch eine Veränderung der Temperatur bewirkt werden.

In manchen dieser und anderer Ausführungsformen enthält das Einsatzelement ein Formgedächtnismaterial, welches in mindestens einem seiner Zuständen hoch pseudoelastisch (superelastisch) ist, wie zum Beispiel Nitinol. In solchen Ausführungsformen eines spreizbaren Einsatzelementes wird die Spreizbarkeit des Einsatzelementes von einem Zustand des Formgedächtnismaterials gewährleistet und es braucht keine Zustandsänderung, um ein solches Einsatzelement zu spreizen. In solchen beispielhaften Ausführungsformen wird das Einsatzelement in einem gespannten, beispielsweise von einem Zangenwerkzeug zusammengepressten Zustand in die Ausnehmung des Keramikimplantates eingesetzt, worauf sich das Einsatzelement nach dem Loslassen der Zange ausdehnt und den Kraftschluss mit der Oberfläche im Einsatzabschnitt der Ausnehmung herstellt.

In manchen Ausführungsformen insbesondere in Ausführungsformen mit einem Einsatzelement aus Spritzgusskeramik wird das Einsatzelement mittels eines Federelementes mit dem Keramikimplantat in der Ausnehmung formschlüssig verbunden. In manchen dieser und anderer Ausführungsformen unterstützt das Federelement als zusätzliches Mittel die formschlüssige Verbindung zwischen dem Einsatzelement und dem Implantat. Das Federelement kann als Ringfeder ausgebildet sein und das Einsatzelement in der Ausnehmung befestigen, beispielsweise indem das Federelement proximal zum Einsatzelement in der Ausnehmung befestigbar ist und dadurch das eingesetzte Einsatzelement formschlüssig in dem Einsatzabschnitt befestigt.

Das Einsatzelement dient der Befestigung des Abutments am Einsatzelement, womit indirekt auch eine Befestigung des Abutments am Keramikimplantat bewirkt wird. Das Einsatzelement weist deshalb Befestigungsstrukturen zur Befestigung des Abutments auf. Der Begriff Befestigungsstrukturen bezeichnet in diesem Text mindestens eine Befestigungsstruktur für die Befestigung des Abutments am Einsatzelement.

Befestigungsstrukturen für die Befestigung von einem Abutment an einem Implantat eines zweiteiligen Implantatsystems sind im Stand der Technik bekannt. Sie werden beispielsweise als aufeinander abgestimmte Innen- und Aussenstrukturen, beispielsweise als Innen- und Aussengewinde ausgebildet. Viele zweiteilige Implantate im Stand der Technik weisen beispielsweise ein Abutment mit einer Aussenstruktur wie ein Aussengewinde und ein Implantat mit einer Innenstruktur wie ein Innengewinde auf oder beispielsweise ein Abutment, welches mit einer Abutmentschraube in einem Innengewinde im proximalen Bereich des Implantates befestigt wird. Solche aus dem Stand der Technik bekannte Befestigungsstrukturen zur Befestigung des Abutments an einem Implantat sind auch anwendbar zur Befestigung des Abutments am Einsatzelement und insbesondere auch an dem in die Ausnehmung des Keramikimplantates eingesetzten und kraftschlüssig mit dem Implantat verbundenen Einsatzelement des erfindungsgemässen Dentalimplantatsystems. Als Aussenstrukturen können neben den bereits genannten Gewinden beispielsweise Rippen, stiftförmige Erhebungen, Ausbuchtungen aller Art und als kooperierende Innenstrukturen Rillen, Löcher und Vertiefungen aller Art dienen. So kann ein Abutment beispielsweise mit einem Bajonettverschluss am Einsatzelement befestigt werden.

In manchen Ausführungsformen, in welchen das Einsatzelement hülsenförmig ist und zusätzlich zu der äusseren Oberfläche auch eine innere Oberfläche aufweist, ist insbesondere die innere Oberfläche mit den Befestigungsstrukturen wie die genannten Innengewinde, Vertiefungen und/oder Ausbuchtungen aller Art wie Rillen, Rippen, Stifte, Löcher, etc. ausgerüstet.

In manchen Ausführungsformen ist das Abutment mit einer Innenstruktur und das Einsatzelement mit einer mit dieser Innenstruktur kooperierenden Aussenstruktur zur Befestigung des Abutments am Einsatzelement ausgerüstet.

In manchen Ausführungsformen des Dentalimplantatsystems ist das Einsatzelement schon vor der Implantation, beispielsweise herstellerseitig, in der Ausnehmung im proximalen Bereich des Keramikimplantates eingesetzt.

In anderen Ausführungsformen liegt das Einsatzelement vor der Implantation als separater Teil des Keramikimplantates vor und wird erst in situ in das Keramikimplantat eingesetzt und mit diesem in einem Kraftschluss verbunden.

Manche der Ausführungsformen des Dentalimplantates, welche sowohl eine kraftschlüssige Verbindung als auch eine formschlüssige Verbindung des Einsatzelementes mit dem Keramikimplantat aufweisen, enthalten ein Einsatzelement, das hülsenförmig und spreizbar ist. Beispielsweise ist das Einsatzelement als ein geschlitzter hülsenförmiger Hohlzylinder ausgebildet und es wird in zusammen gedrückt und distal zu einem Hinterschnitt in den Einsatzabschnitt der Ausnehmung eingesetzt und losgelassen. Auf Grund der Spreizung des Einsatzelementes und des Hinterschnittes der Ausnehmung entsteht ein Kraft- und ein Formschluss zwischen dem Einsatzelement und dem Implantat. In manchen Ausführungsformen ist das Einsatzelement beispielsweise als hohle konische Hülse ausgebildet oder enthält das Einsatzelement beispielsweise hohle konische Abschnitte, wobei der Durchmesser in proximaler Richtung des Konus abnimmt.

In manchen Ausführungsformen des Dentalimplantatsystems ist das Einsatzelement gegenüber Rotationskräften zusätzlich mit einer formschlüssigen Verbindung in der Ausnehmung des Keramikimplantats verbunden. In manchen dieser Ausführungsformen ist die Ausnehmung mit einer Innenstruktur beispielsweise einer Innengeometrie ausgestattet und das Einsatzelement mit einer kooperierenden Aussenstruktur ausgestattet, welche im verbundenen Zustand eine Verdrehsicherung bewirken.

Das Abutment und der proximale Bereich der Ausnehmung des Keramikimplantates weisen Strukturen zur Verdrehsicherung des am Keramikimplantat befestigten Abutments auf. In manchen Ausführungsformen weist die Ausnehmung proximal zum Einsatzabschnitt einen proximalen Bereich auf, welcher in einer Art geformt oder mit speziellen Strukturen ausgestattet, die zu einem distalen Bereich des Abutments passen und oder mit diesem kooperieren. Beispielsweise kann der proximale Bereich der Ausnehmung mit einer Innengeometrie wie beispielsweise ein Innengleichdick oder ein Innensechskant ausgestattet sein, welcher mit einer im distalen Bereich des Abutments angeordneten Aussengeometrie kooperiert.

Ein weiterer Aspekt der Erfindung betrifft ein Set enthaltend ein Keramikimplantat und Einsatzelement für ein Dentalimplantatsystem wie es in diesem Text beschrieben ist.

In manchen Ausführungsformen dieses Aspekts der Erfindung ist das Keramikimplantat mit einem Einsatzelement steril verpackt, wobei das Keramikimplantat und das Einsatzelement als separate Teile vorliegen oder wobei das Einsatzelement bereits in die Ausnehmung des Keramikimplantats eingesetzt ist.

Ein Set kann weiter ein Abutment enthalten, und optional eine Abutmentschraube für ein Dentalimplantatsystem wie es in diesem Text beschrieben ist.

Im Folgenden werden Prinzipien des Dentalimplantatsystems mit Figuren illustriert, welche das Verständnis der Erfindung erleichtern sollen. Die Figuren sind nicht zwingend massstäblich. Gleiche Bezugszeichen bezeichnen gleiche oder analoge Elemente.

### Figurenliste:

**Fig. 1****:** Schematische Darstellung eines Dentalimplantatssystems mit vier beispielhaften Teilen: einem Keramikimplantat, einem Einsatzelement, einem Abutment und einer Abutmentschraube. **Fig 1a** zeigt ein Set mit einem Keramikimplantat und einem darin eingesetzten Einsatzelement. **Fig. 1b** zeigt das Dentalimplantatsystem im verbundenen Zustand mit dem Abutment durch eine Abutmentschraube im Einsatzelement des Keramikimplantates befestigt.
**Fig. 2****:** Schematische Aufsicht auf ein beispielhaftes Set mit einem Abutment und einem auf eine Abutmentschraube montiertes Einsatzelement.
**Fig. 3** Schematische Zeichnungen von drei Beispielen mit einem Kraftschluss und / oder einem Formschluss zwischen Einsatzelement und Keramikimplantat im Einsatzabschnitt der Ausnehmung:
   **Fig. 3a**: Beispiel eines zylindrischen Einsatzelementes, das mittels eines hinterschnittenen Einsatzabschnitts mit dem Keramikimplantat formschlüssig verbunden ist, und das optional zusätzlich kraftschlüssig mit dem Implantat verbindbar ist.
   **Fig. 3b**: Zylindrisches spreizbares Einsatzelement aus einem elastischen Material wie Kunststoff oder Metall das rein kraftschlüssig mit der Oberfläche der Ausnehmung verbunden ist.
   **Fig. 3c**: Konisches spreizbares Einsatzelement das sowohl kraft- als auch formschlüssig mit der Oberfläche der Ausnehmung des Keramikimplantats verbunden ist.
**Fig. 4a - 4c** zeigen je eine Aufsicht (Fig. 4a) oder perspektivische Ansicht (Fig. 4a, 4b und 4c) sowie mindestens einen Schnitt von beispielhaften hülsenförmigen Einsatzelementen, welche spreizbar und konisch hinterschnitten sind:

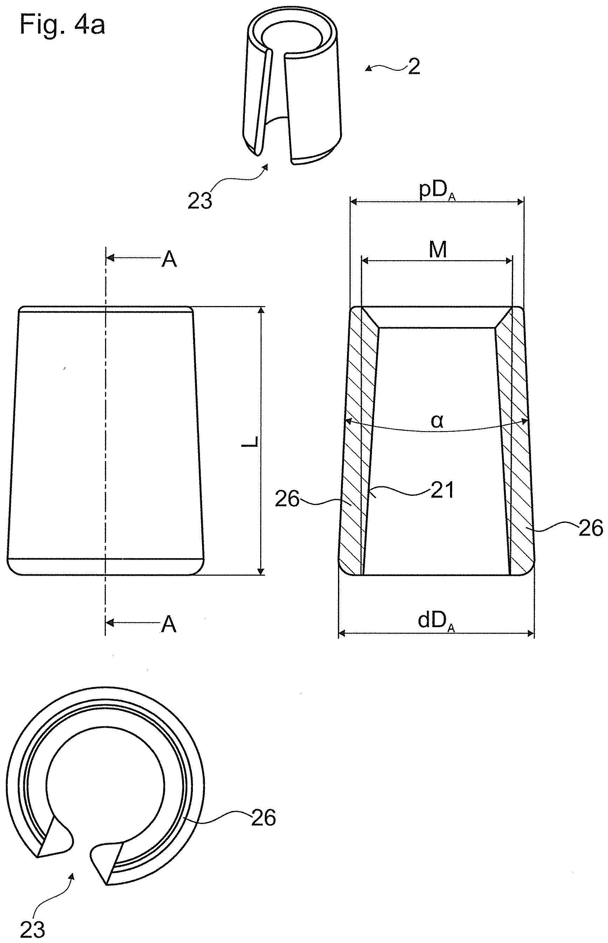

   **Fig. 4a**: Einfach geschlitztes konisches hülsenförmiges Einsatzelement

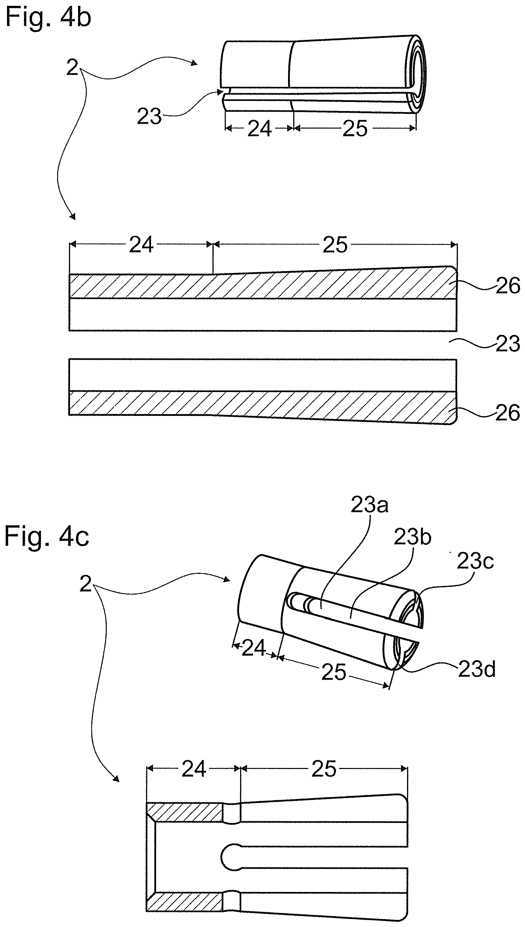

   **Fig. 4b**: Einfach geschlitztes konisches hülsenförmiges Einsatzelement mit einem proximal angeordneten zylindrischen Abschnitt
   **Fig. 4c**: Vierfach geschlitztes konisches hülsenförmiges Einsatzelement mit einem proximal angeordneten zylindrischen Abschnitt

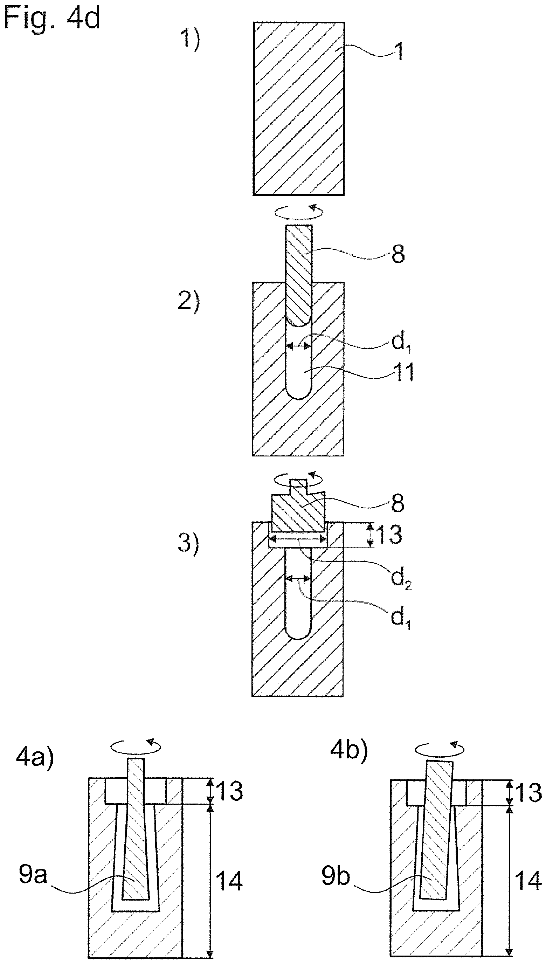

**Fig. 4d**: zeigt eine schematische Darstellung zur Herstellung eines konisch hinterschnittenen Einsatzabschnitts mit einer konischen Schleifscheibe oder alternativ mit einem zylindrischen Schleifstift;

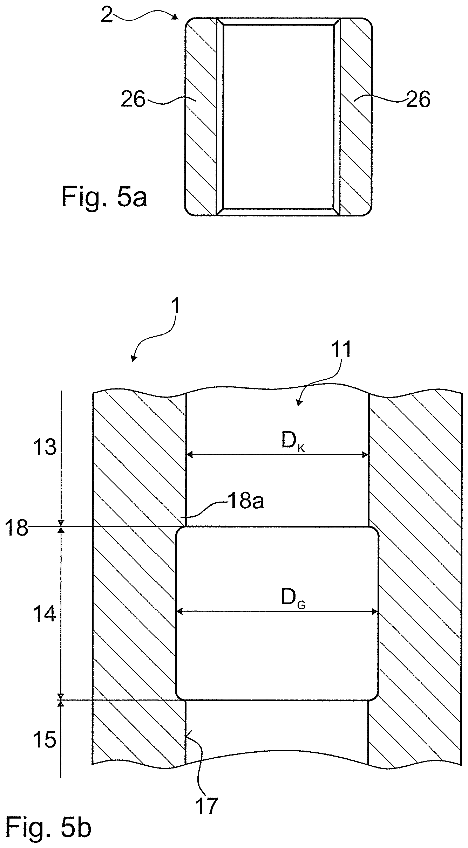

**Fig. 5** zeigt ein beispielhaftes zylindrisches hülsenförmiges spreizbares Einsatzelement und einen hinterschnittenen Einsatzabschnitt zur form- und kraftschlüssigen Verbindung von Einsatzelement und Keramikimplantat
   **Fig. 5a**: In den hinterschnittenen Einsatzabschnitt passendes Einsatzelement
   **Fig. 5b**: Zylindrischer hinterschnittener Einsatzabschnitt der Ausnehmung

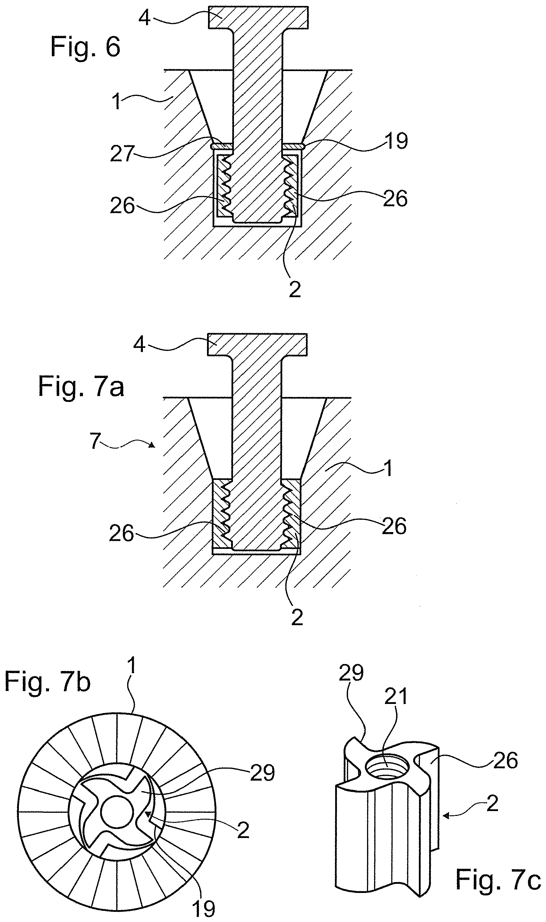

**Fig. 6** zeigt schematisch beispielhafte Ausführungsformen eines nicht spreizbaren Einsatzelementes und des Keramikimplantats in einer formschlüssigen Verbindung mittels eines proximal zum Einsatzelement eingebrachten Federelements.
**Fig. 7****:** zeigt schematisch ein weiteres Dentalimplantatsystem mit einem nicht-spreizbaren Einsatzelement beispielsweise aus Spritzgusskeramik, welches mittels einer **kraft**schlüssigen Verbindung mit dem Keramikimplantat im Einsatzabschnitt der Ausnehmung verbunden ist.
   **Fig. 7a**: Längsschnitt durch ein beispielhaftes Set mit Keramikimplantat und mit eingesetztem Einsatzelement
   **Fig. 7b**: Aufsicht auf das Set mit Keramikimplantat und eingesetztem Einsatzelement von oben
   **Fig. 7c**: perspektivische Ansicht auf das Einsatzelement

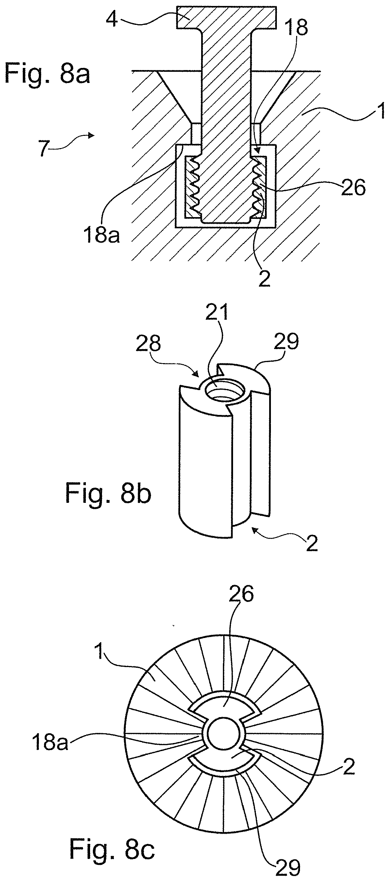

**Fig. 8****:** zeigt schematisch ein weiteres Dentalimplantatsystem bzw. des Set mit einem beispielhaften nicht-spreizbaren Einsatzelement beispielsweise aus Spritzgusskeramik, welches mittels einer **forms**chlüssigen Verbindung mit dem Keramikimplantat im Einsatzabschnitt der Ausnehmung verbunden ist
   **8a**: Längsschnitt durch das Set mit Keramikimplantat und eingesetztem Einsatzelement
   **8b**: perspektivische Ansicht auf das Einsatzelement
   **8c**: Aufsicht auf das Set mit Keramikimplantat mit eingesetztem Einsatzelement von oben

### Bezugszeichenliste:

- 1: Keramikimplantat
- 10: proximale Stirnfläche des Keramikimplantates
- 11: Ausnehmung
- 12: proximale Öffnung der Ausnehmung
- 13: proximaler Abschnitt der Ausnehmung
- 14: Einsatzabschnitt der Ausnehmung
- 15: distaler Endabschnitt der Ausnehmung
- 16: Aussengewinde des Keramikimplantats
- 17: Oberfläche der Ausnehmung
- 18: proximales Ende des Einsatzabschnittes
- 18a: Vorsprung der Oberfläche 17 der Ausnehmung 11 am proximalen Ende 18 des Einsatzabschnittes 14
- 19: Oberflächenstruktur, zum Beispiel eine flügelartige Wandverdickung oder eine Vertiefung in der Oberfläche 17 der Ausnehmung beispielsweise im Einsatzbereich 14 der Ausnehmung11
- 2: Einsatzelement
- 21: Befestigungsstruktur des Einsatzelementes
- 22: äusseren Oberfläche des Einsatzelementes
- 23: Schlitz bzw. Schlitze 23 a, 23 b, 23c, 23d
- 24: proximaler Bereich des Einsatzelementes
- 25: distaler Bereich des Einsatzelementes
- 26: Wand eines hülsenförmigen Einsatzelementes
- 27: Federelement zur Befestigung des Einsatzelementes im Einsatzabschnitt
- 28: Wandbereich des Einsatzelements 2 mit einer Einbuchtung in der Wand
- 29: Wandbereich des Einsatzelementes mit einer Ausbuchtung oder einer Verdickung
- 3: Abutment
- 4: Abutmentschraube
- 41: Aussengewinde der Abutmentschraube
- 5: Dentalimplantatssystem mit Einsatzelement und Abutment alle im verbundenen Zustand
- 6: Set mit Abutment, Abutmentschraube und Einsatzelement in vormontiertem Zustand
- 7: Set mit Keramikimplantat und Einsatzelement im verbundenen Zustand
- 8: Zylindrischer Schleifstift oder zylindrische Schleifscheibe
- 9: Konischer Schleifstift

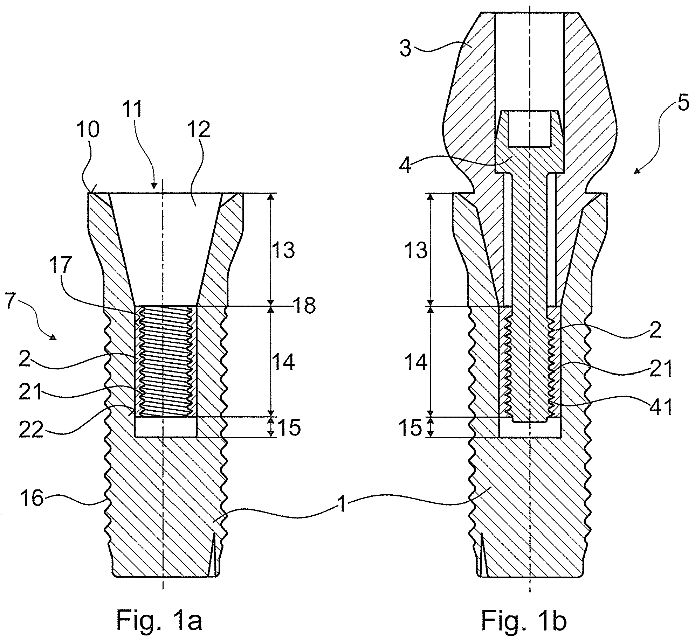

**Figur** 1 zeigt ein beispielhaftes Dentalimplantatsystem 5. In **Fig. 1a** ist ein Set 7 mit einem Keramikimplantat 1, welches im Wesentlichen in den Knochen implantiert wird, und einem eingesetzten Einsatzelement 2 dargestellt. In **Fig. 1b** ist das beispielhafte Dentalimplantatsystem in verbundenen Zustand mit dem Keramikimplantat 1, dem Einsatzelement 2, einem Abutment 3 und einer Abutmentschraube 4 dargestellt. Das beispielhafte Keramikimplantat 1 weist einen proximalen Bereich auf mit einer Ausnehmung 11 mit einer proximalen Öffnung 12. Die Ausnehmung 11 weist in axialer Richtung drei axiale Abschnitte auf: einen proximalen Abschnitt 13, einen Einsatzabschnitt 14 und einen distalen Endabschnitt 15. Das beispielhafte Keramikimplantat 1 weist ein Aussengewinde 16 auf.

Der proximale Abschnitt 13 dient zur Aufnahme eines distalen Bereichs des Abutments 3 und ist als ein sich in proximaler Richtung erweiternder Konus ausgebildet. Selbstverständlich kann der proximale Abschnitt 13 der Ausnehmung 11 des Keramikimplantats 1 mit grossen Freiheitsgraden unterschiedlich geformt sein, beispielsweise zylindrisch statt konisch oder mit einer Querschnittsfläche, welche nicht ein Kreis ist, sondern ein Oval, ein Dreieck, ein Viereck, oder ein anderes regel- oder unregelmässiges Vieleck, jeweils optional mit gerundeten Ecken oder ein Gleichdick, der proximale Abschnitt 13 kann rotationssymmetrisch oder nicht rotationssymmetrisch sein, im Allgemeinen jedoch ist die Form des proximalen Abschnitts 13 der Ausnehmung 11 des Keramikimplantats 1 darauf abgestimmt, dass er mit dem Abutment 3 kooperieren kann. In manchen Ausführungsformen ist der proximale Abschnitt 13 der Ausnehmung 11 des Keramikimplantats 1 axial auch in Unterabschnitte mit unterschiedlichen Querschnittsflächen weiter unterteilt.

Der Einsatzabschnitt 14 ist distal zum proximalen Abschnitt 13 angeordnet und dient der Aufnahme des Einsatzelementes 2. Das dargestellte im Einsatzabschnitt 14 eingesetzte beispielhafte Einsatzelement 2 weist ein Innengewinde 21 auf und wird beispielsweise von einer Abutmentschraube 4 mit einem Aussengewinde 41 gespreizt, wodurch ein Kraftschluss zwischen einer äusseren Oberfläche 22 des Einsatzelementes mit einer Oberfläche 17 der Ausnehmung 11 entsteht. In andern nicht dargestellten Ausführungsformen kann der Einsatzabschnitt 14 mindestens teilweise mit dem proximalen Abschnitt 13 überlappen funktional verschmelzen, beispielsweise in Ausführungsformen, in welchen ein distaler Bereich des Abutments 3 ein spreizbares Einsatzelement 2 im verbundenen Zustand des Dentalimplantatsystems 5 aufspreizt.

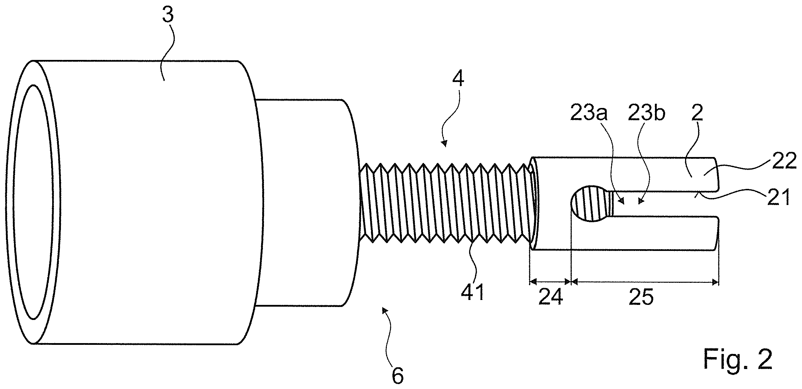

**Figur 2** zeigt eine Aufsicht auf ein beispielhaftes Set 6 eines schematisch dargestellten Abutments 3 mit einem beispielhaften zylindrischen hülsenförmigen Einsatzelement 2, mit einem Innengewinde als Befestigungsstruktur 21 für eine Abutmentschraube 4. In der gezeigten schematischen Darstellung ist das Einsatzelement 2, auf ein Aussengewinde 41 der Abutmentschraube 4 vormontiert. Das Einsatzelement 2 dient zur Befestigung des Abutments 3 in einer Ausnehmung 11 eines Keramikimplantates 1, welches in Fig. 2 nicht dargestellt ist. Das Einsatzelement 2 ist vierfach geschlitzt mit zwei sichtbaren Schlitzen 23 a und 23 b und nicht erkennbaren Schlitzen 23 c und d welche senkrecht zu den Schlitzen 23 a und 23 b in einem distalen Bereich 25 des Einsatzelementes 2 angeordnet sind. Ein proximaler Bereich 24 des Einsatzelementes 2 ist ungeschlitzt.

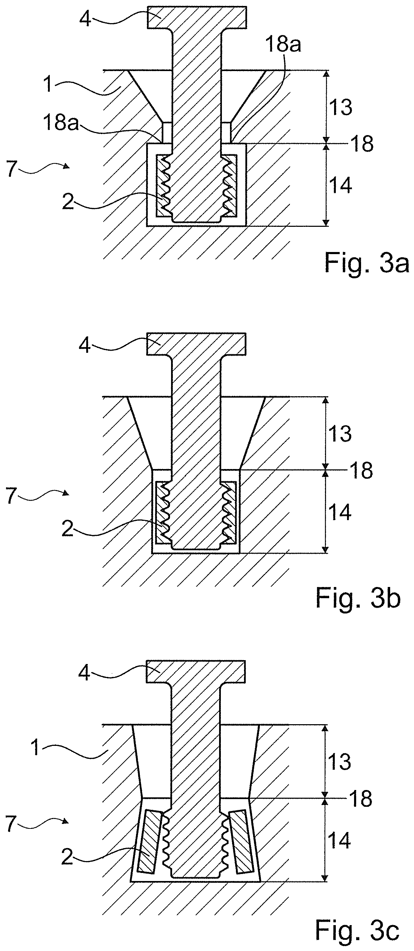

**Figuren 3a bis 3c** zeigen schematische Darstellungen von beispielhaften Ausführungsformen eines Set 7 mit Keramikimplantat 1 und Einsatzelement 2 bzw. des Dentalimplantatsystems 5 im verbundenen Zustand. Dargestellt sind insbesondere beispielhafte in den Einsatzabschnitt 14 eingesetzte hülsenförmige Einsatzelemente 2, dargestellt jeweils in einem Längsschnitt.
Fig. **3a** zeigt ein Beispiel eines zylindrischen Einsatzelementes 2, wobei das Einsatzelement 2 mittels eines hinterschnittenen Einsatzabschnitts 14 durch eine Verengung des Durchmessers der Ausnehmung 11 am proximalen Ende 18 des Einsatzabschnitts 14 mit dem Keramikimplantat 1 formschlüssig verbunden ist. Die Verengung des Durchmessers der Ausnehmung 11 am proximalen Ende des Einsatzabschnitts 14 bildet einen Vorsprung 18a der Oberfläche 17 der Ausnehmung 11. Dieser Vorsprung 18a verhindert ein Herausziehen in proximaler Richtung des Einsatzelementes 2 aus dem Einsatzabschnitt 14. In manchen dieser beispielhaften Ausführungsformen kann das Einsatzelement 2 zusätzlich zur formschlüssigen Verbindung kraftschlüssig mit dem Keramikimplantat 1 verbunden sein, wobei dies nicht in Fig. 3a erkennbar dargestellt ist. In manchen dieser beispielhaften Ausführungsformen, in welchen das Einsatzelement 2 form- und kraftschlüssig mit dem Keramikimplantat 1 verbunden ist, ist das Einsatzelement 2 elastisch und weitet sich aus, nachdem es eingesetzt ist. In manchen Ausführungsformen ist das Einsatzelement 2 beispielsweise aus einem Material wie Kunststoff oder Metall hergestellt und in einem distalen Bereich 25 des Einsatzelementes 2 geschlitzt und spreizbar ist. Manche dieser und anderer Ausführungsformen des Einsatzelements 2 können beispielsweise durch die Abutmentschraube 4 oder ein Werkzeug oder im Falle eines Formgedächtnismaterials durch eine Temperaturveränderung oder mechanische Einwirkung gespreizt werden und somit zusätzlich zu dem durch den Hinterschnitt gewährleisteten Formschluss kraftschlüssig mit dem Keramikimplantat 1 verbunden werden. Manche Ausführungsformen des beispielhaften zylindrischen Einsatzelementes, in welchen es aus Spritzgusskeramik besteht, ist es nicht spreizbar oder dehnbar.
Fig. **3b** zeigt ein Beispiel eines zylindrischen spreizbaren Einsatzelements 2 beispielsweise aus Kunststoff oder Metall, das rein kraftschlüssig mit der Oberfläche 17 der Ausnehmung 11 im Einsatzabschnitt 14 des Keramikimplantats 1 verbindbar ist. Das Einsatzelement 2 kann, wie z.B. einfach oder mehrfach geschlitzt sein und sich beispielsweise durch das Eindrehen einer Abutmentschraube 4 spreizen oder es kann ein elastisches oder superelastisches Material aufweisen und zusammengedrückt in den Einsatzabschnitt 14 eingesetzt werden und sich sobald es nicht mehr zusammengedrückt wird ausdehnen und einen Kraftschluss mit dem Implantat bilden.
**Fig. 3c** zeigt ein beispielhaftes konisches spreizbares Einsatzelement 2 aus einem elastischen Material wie Kunststoff oder Metall, insbesondere aus einem superelastischen Formgedächtnismaterial, das beispielsweise von einer Zange zusammen gedrückt in den Einsatzabschnitt 14 der Ausnehmung 11 eingesetzt wird, und sobald es im Einsatzbereich 14 losgelassen wird einen Kraftschluss zwischen der Oberfläche 17 der Ausnehmung 11 und der Oberfläche 22 des Einsatzelementes 2 bildet. Der sich in distaler Richtung erweiternde Konus bildet einen hinterschnittenen Einsatzabschnitt 14, was eine zusätzliche formschlüssige Verbindung des Einsatzelementes 2 mit dem Implantat 1 bewirkt. Das Eindrehen einer Abutmentschraube 4 kann eine Dehnung / Spreizung des Einsatzelementes 2 bewirken und dieses noch fester in dem hinterschnittenen Einsatzabschnitt 14 zurückhalten.

**Fig. 4** zeigt verschiedene beispielhafte Ausführungsformen von hülsenförmigen geschlitzten konischen Einsatzelementen 2, welche spreizbar oder dehnbar sind:
**Fig. 4a** zeigt ein einfach geschlitztes konisches hülsenförmiges Einsatzelement 2 mit einem Schlitz 23 in einer perspektivischen Ansicht, einer Aufsicht, einem Längs- und einem Querschnitt. Das Einsatzelement 2 ist über seine ganze axiale Länge L von beispielsweise 1.9 mm bis 2.4 mm als hohler Konus mit einem Öffnungswinkel α von 2° bis 20°, beispielsweise von 4° bis 10° ausgebildet und weist eine innere Oberfläche 21 und eine Einsatzelementwand 26 auf. Das Einsatzelement 2 ist beispielsweise aus einem Formgedächtnismaterial wie Nitinol hergestellt. Der distale Aussendurchmesser dD_{A} des konischen Einsatzelementes 2 misst beispielsweise 1.4 mm bis 1.8 mm und ist beispielsweise 0.1 mm bis 0.3 mm grösser als der proximale Aussendurchmesser pD_{A}. Die innere Oberfläche weist ein Innengewinde 21 auf, wie beispielsweise ein metrisches ISO-Gewinde mit den Massen M, beispielsweise M1,2.
**Fig. 4b**: zeigt eine beispielhafte Ausführungsform hülsenförmigen Einsatzelements 2, welches durchgehend mit einem Schlitz 23 geschlitzt ist sowohl in einem proximalen zylindrischen Bereich 24 als auch in einem distalen konischen Bereich 25, dargestellt in einer perspektivischen Ansicht und in einem Längsschnitt. Ein derartiges spreizbares Einsatzelement 2 ist beispielsweise aus einem dehnbaren, elastischen Material der Stoffklasse Metall oder Kunststoff hergestellt, insbesondere auch aus einem superelastischen Formgedächtnismaterial.
**Fig. 4c**: zeigt eine weitere beispielhafte Ausführungsform eines hülsenförmigen spreizbaren Einsatzelements 2, welches in einem distalen konischen Bereich 25 vierfach mit 4 Schlitzen 23a - 23d geschlitzt ist und welches in einem proximalen zylindrischen Bereich 24 als umlaufender ungeschlitzter Zylinder ausgebildet ist.
**Fig. 4d**: zeigt eine schematische Darstellung mit vier Schritten zur Herstellung einer beispielhaften Ausführungsform des Keramikimplantates 1 mit einer Ausnehmung 11 mit einem erweiterten zylindrischen proximalen Abschnitt 13 und einem konischen hinterschnittenen Einsatzabschnittes 14.

In einem Schritt 1 wird ein Rohling eines Keramikimplantates 1 bereitgestellt, in welchen im Schritt 2 mit einem hohlen zylindrischen Schleifstift 8 eine zylindrische Ausnehmung 11 mit einem Durchmesser d₁ geschliffen wird.
In einem Schritt 3 wird mit einer weiteren zylindrischen Schleifscheibe 8 ein proximaler Bereich 13 mit einem grösseren Durchmesser d₂ hergestellt.
In einem Schritt 4 wird der sich in distaler Richtung erweiternde konische Einsatzabschnitt 14 hergestellt. Der konische Einsatzabschnitt wird beispielsweise mit einem abgewinkelten zylindrischen Schleifstift oder unter Verwendung eines konischen Schleifstifts 9a, dessen Durchmesser sich in distaler Richtung erweitert hergestellt, wie in Fig.4d Schritt 4a gezeigt. Ein solcher konischer Schleifstift 9a weist einen Durchmesser am distalen Ende des konischen Schleifstifts auf, der kleiner ist als der Durchmesser d₁ der in Schritt 2 hergestellten Ausnehmung 11. Deshalb kann der konische Schleifstift 9a in die Ausnehmung 11, deren Durchmesser ab dem distalen Ende des proximalen Abschnitts 13 den Duchmesser d₁, aufweist, bis an das distale Ende der Ausnehmung eingeführt werden. Mit einer Rotationsbewegung des konischen Schleifstifts 9a um die eigene Achse und einer überlagerten weiteren Rotationsbewegung entlang der Oberfläche der Ausnehmung 11 wird der Einsatzbereich 14 als ein sich in distaler Richtung erweiternder Konus ausgeschliffen. Alternativ zu Schnitt 4a kann in einem Schritt 4b der Einsatzbereich 14 mit Hilfe eines zylindrischen Schleifstiftes 9b als ein sich in distaler Richtung erweiternder Konus ausgeschliffen werden. Der zylindrische Schleifstift 9b, mit einem Durchmesser kleiner als der Durchmesser d₁ der in Schritt 2 hergestellten Ausnehmung 11, rotiert um seine eigene Achse und wird bezüglich einer Implantatachse gekippt geführt. Eine weitere eventuell kreiselartige Rotationsbewegung des zylindrischen Schleifstiftes 9b entlang der Oberfläche der Ausnehmung 11 ermöglicht das Ausschleifen des konisch hinterschnittenen Einsatzabschnitts. In weiteren Ausführungsbeispielen ist es möglich die Schritte 4a und 4b zu kombinieren und beispielsweise zunächst mit dem gekippten, zylindrischen Schleifstift 9b den Einsatzbereich 14 vorzuformen und anschliessend mit einem konischen Schleifstift 9a nachzubearbeiten.

**Fig. 5** zeigt je einen Längsschnitt eines beispielhaften zylindrischen hülsenförmigen spreizbaren Einsatzelementes 2 und eines axialen Bereichs eines beispielhaften Keramikimplantats 1 mit einem hinterschnittenen Einsatzabschnitt 14 und einem proximalen Abschnitt 13. Das Einsatzelement 2 bildet eine form- und optional zusätzlich kraftschlüssige Verbindung mit dem Keramikimplantat 1 bilden. In **Fig. 5a** ist das in den hinterschnittenen Einsatzabschnitt 14 passende beispielhafte Einsatzelement 2 abgebildet. Damit es in den Einsatzabschnitt, der in **Fig. 5** **b** dargestellt ist, eingesetzt werden kann, muss es zuerst zusammengedrückt werden, um den engeren proximalen Abschnitt 13 der Ausnehmung 11 mit dem kleineren Durchmesser D_{K} zu passieren. Dieses beispielhafte Einsatzelement 2 muss also zusammenpressbar und wieder spreizbar sein oder elastische Eigenschaften aufweisen. Sobald das zusammengesetzte Einsatzelement 2 in den hinterschnittenen Einsatzbereich 14 eingesetzt ist, kann es sich aufweiten oder spreizen auf Grund des grösseren Durchmesser D_{G} im Vergleich zu dem kleineren Durchmesser D_{K} proximalen Abschnitt 13. Bei einer ausreichend grossen Spreizung oder Ausweitung entsteht dadurch zusätzlich zum Formschluss auch ein Kraftschluss zwischen der Oberfläche 17 der Ausnehmung 11 und der Oberfläche 22 des Einsatzelementes kraftschlüssig verbinden. Das proximale Ende des eingesetzten Einsatzelementes 2 ist am proximalen Ende des Einsatzbereiches 18 und distal zum Vorsprung 18a der Oberfläche 17 in der Ausnehmung 11 verriegelt. Es kann in dem ausgeweiteten oder gespreizten Zustand nicht mehr am Vorsprung 18a vorbei und ist mit einem Formschluss im Einsatzabschnitt 14 mit dem Keramikimplantat 1 verbunden.

**Fig. 6** zeigt schematisch ein Ausführungsbeispiel einer formschlüssigen Verbindung eines beispielhaften nicht spreizbaren Einsatzelementes 2 beispielsweise aus Spritzgusskeramik, welches mittels eines proximal zum eingesetzten Einsatzelement 2 angebrachten Federelement 27 in der Ausnehmung 11 des Keramikimplantats 1 mit dem Keramikimplantat 1 formschlüssig verbunden wird. Denn das Federelement 27 bewirkt eine Verengung des Durchmessers der Ausnehmung 11 am proximalen Ende des Einsatzabschnittes 14. Das Federelement kann beispielsweise als Ringfeder ausgebildet sein. In manchen dieser und anderer Ausführungsbeispielen des Federelementes ist es aus einem Formgedächtnismaterial hergestellt. In manchen Ausführungsformen ist das Einsatzelement beispielsweise hülsenförmig axial geschlitzt und das Einsetzen eines oder mehrerer Federelementes bewirkt eine Spreizung des Einsatzelementes. In beispielhaften nicht spreizbaren Ausführungsformen des Einsatzelementes beispielsweise aus Spritzgusskeramik kann ein oder mehrere Federelemente beispielsweise aus einem superelastischen Material auf das Einsatzelement aufgespannt werden und einen Kraftschluss mit dem Implantat herstellen. Beispielsweise kann mindestens ein Federelement in mindestens einer optional umlaufenden Nut auf der äusseren Oberfläche des nicht spreizbaren Einsatzelementes aufgespannt werden. So verbindet das mindest eine Federelement das nicht spreizbare Federelement in einem Kraftschluss im Einsatzbereich der Ausnehmung.

**Fig. 7** zeigt schematisch ein weiteres Ausführungsbeispiel des Dentalimplantatsystems mit einem beispielhaften nicht-spreizbaren Einsatzelement 2 beispielsweise aus Spritzgusskeramik, welches mittels einer kraftschlüssigen Verbindung mit dem Keramikimplantat 1 im Einsatzabschnitt 14 der Ausnehmung 11 verbunden ist. Die kraftschlüssige Verbindung entsteht beim Verdrehen des Einsatzelementes 2 in der Ausnehmung, indem sich die flügelartig sich erweiternden Vorsprünge 29 der Wand 26 des Einsatzelementes 2 durch die Drehbewegung mit den sich in der Drehrichtung erweiternden Wandvorsprüngen 19 auf der Oberfläche 17 der Ausnehmung des Keramikimplantats 1 verkeilen. Dadurch entsteht ein Reib- bzw. Kraftschluss, der das Einsatzelement 2 im Einsatzbereich 14 festklemmt und so mit dem Keramikimplantat 1 verbindet. **Fig. 7a** zeigt einen Schnitt durch das Keramikimplantat 1 mit dem eingesetzten Einsatzelement 2, **Fig. 7b** eine Aufsicht auf Keramikimplantat 1 mit eingesetztem Einsatzelement 2 von oben und **Fig. 7c** eine perspektivische Ansicht auf das Einsatzelement 2.

In verschiedenen in den Figuren dargestellten Ausführungsformen ist das Einsatzelement 2 hülsenförmig und weist ein Innengewinde 21 auf zum Eindrehen einer Abutmentschraube 4 zur Befestigung eines Abutments. In manchen nicht dargestellten Ausführungsformen des Dentalimplantatsystems 5 weist das Abutment 3 selbst ein Aussengewinde oder andere Verbindungsstrukturen auf, welche in einem Einsatzbereich 14 des Keramikimplantats 1 mit Befestigungsstrukturen 21 des Einsatzelementes 2 kooperieren und so eine indirekte Verbindung zwischen Abutment 3 und Implantat 1 herstellen.
Diese und auch andere der hier dargestellten oder auch andere nicht dargestellte beispielhafte Ausführungsformen eines Sets 7 von Keramikimplantat 1 und Einsatzelement 2 können herstellerseitig vormontiert und steril verpackt werden oder das Set 7 kann herstellerseitig beispielsweise mit dem Einsatzelement 2 und dem Keramikimplantat 1 als separate Teile steril verpackt werden. Im letzteren Fall können das Einsatzelement 2 und das Keramikimplantat 1 vor der Implantation des Keramikimplantates oder in situ miteinander verbunden werden.

**Fig. 8** zeigt schematisch ein weiteres Ausführungsbeispiel des Dentalimplantatsystems 5 beziehungsweise des Sets 7 mit einem beispielhaften nicht-spreizbaren Einsatzelement 2 beispielsweise aus Spritzgusskeramik, welches mittels einer formschlüssigen Verbindung mit dem Keramikimplantat 1 im Einsatzabschnitt 14 der Ausnehmung 11 verbunden ist. **Fig. 8a** zeigt einen Querschnitt durch das Set 7 mit dem im Implantat 1 eingesetzten Einsatzelement 2, welches durch einen Vorsprung 18a in der Ausnehmung 11 am proximalen Ende 18 des Einsatzbereiches 14 in der Ausnehmung 11 in einem Formschluss in der Art eines Bajonett-Verschlusses in dem Keramikimplantat 1 verriegelt ist, sobald das eingesetzte Einsatzelement 2 durch eine Drehbewegung unter den Vorsprung 18a geschoben wird. **Fig. 8b** zeigt eine perspektivische Ansicht auf das hülsenförmige Einsatzelement 2 mit einem Innengewinde als Befestigungsstruktur 21 zur Befestigung des Abutments 3 und mit zwei Aussparungen 28 in der Wand des Einsatzelementes 2 und zwei Wandverdickungen 29. **Fig. 8c** zeigt eine Aufsicht auf das bereits im Keramikimplantat 1 eingesetzte Einsatzelement 2 von oben, wobei das Einsatzelement 2 erst in den Einsatzabschnitt 14 der Ausnehmung 11 eingesetzt ist, aber noch nicht gedreht, also noch nicht mit seinen Wandverdickungen 29 unter dem Vorsprung 18a im Einsatzabschnitt 14 verriegelt und deshalb noch nicht mit dem Keramikimplantat 1 fest verbunden ist.

## Patentansprüche

1. Dentalimplantatsystem (5) enthaltend ein Keramikimplantat (1) und ein Abutment (3), wobei das Keramikimplantat (1) eine als Sackloch ausgebildete Ausnehmung (11) mit einer proximalen Öffnung (12) aufweist und wobei das Dentalimplantatsystem (5) ferner ein für die Ausnehmung (11) passendes Einsatzelement (2) aufweist, wobei das Einsatzelement (2) aus nicht keramischem Material gefertigt ist oder wobei das Einsatzelement (2) im Wesentlichen aus Spritzgusskeramik gefertigt ist und wobei das Einsatzelement (2) mit Strukturen (21) für eine Befestigung des Abutments (3) am Einsatzelement (2) ausgerüstet ist, wobei das Einsatzelement (2) mittels einer gegenüber axialem Zug kraftschlüssigen und/oder formschlüssigen Verbindung in der Ausnehmung (11) des Keramikimplantates (1) mit dem Keramikimplantat (1) verbindbar ist oder verbunden ist, **dadurch gekennzeichnet, dass** die Ausnehmung einen Einsatzabschnitt (14) aufweist, welcher sich gegen distal konisch erweitert oder einen sich in distaler Richtung konisch erweiternden Teilabschnitt aufweist und durch diesen Hinterschnitt eine Verbindung zwischen dem Einsatzelement (2) und dem Keramikimplantat gegenüber axialem Zug bewirkt, und dass die Ausnehmung proximal des Einsatzbereichs einen proximalen Abschnitt (13) mit Strukturen aufweist, welche mit einem distalen Bereich des Abutments (2) zur Verdrehsicherung das am Keramikimplantat befestigten Abutments zusammenwirken.

2. Dentalimplantatsystem (5), nach Anspruch 1, wobei das Einsatzelement (2) im Wesentlichen aus nicht keramischem Material, und insbesondere aus Kunststoff oder aus Metall gefertigt ist.

3. Dentalimplantatsystem (5) nach Anspruch 2, wobei das Einsatzelement (2) spreizbar ist und im gespreizten Zustand kraftschlüssig mit dem Keramikimplantat (1) verbunden ist.

4. Dentalimplantatsystem (5) nach Anspruch 1, wobei das Einsatzelement (2) im Wesentlichen aus Spritzguss- Keramikmaterial gefertigt ist.

5. Dentalimplantatsystem (5) nach einem der Ansprüche 1 - 4, wobei das Einsatzelement (2) gegenüber axialem Zug mindestens mit einer kraftschlüssigen Verbindung in der Ausnehmung (11) des Keramikimplantats (1) verbindbar oder verbunden ist.

6. Dentalimplantatsystem (5) nach einem der vorangehenden Ansprüche, wobei das Einsatzelement (2) hülsenförmig ist und mit einem Innengewinde für eine Abutmentschraube (4) oder für ein Aussengewinde auf dem distalen Bereich des Abutments (3) ausgerüstet ist.

7. Dentalimplantatsystem (5) nach Anspruch 3 und 6, wobei sich das spreizbare Einsatzelement (2) beim Eindrehen der Abutmentschraube (4) spreizt und kraftschlüssig mit dem Keramikimplantat (1) verbindet.

8. Dentalimplantatsystem (5) einem der vorangehenden Ansprüche, wobei das Dentalimplantatsystem (5) ein Federelement (27) enthält, wobei das Federelement (27) ein separater oder ein mit dem Einsatzelement (2) verbundener Teil ist und wobei das Federelement (27) im verbundenem Zustand des Dentalimplantatsystems (5) kraftschlüssig in der Ausnehmung (11) mit dem Keramikimplantat (1) verbunden ist.

9. Dentalimplantatsystem (5) nach einem der vorangehenden Ansprüche 1 - 8, wobei das Einsatzelement (2) und / oder ein optionales Felderelement (24) ein Formgedächtnismaterial enthält.

10. Dentalimplantatsystem (5) nach einem der vorangehenden Ansprüche, wobei das Einsatzelement (2) gegenüber Rotationskräften zusätzlich mit einer formschlüssigen Verbindung insbesondere mit einer Verdrehsicherung im Einsatzabschnitt (14) der Ausnehmung (11) des Keramikimplantates (1) verbunden ist.

11. Set (7) enthaltend ein Keramikimplantat (1) und ein Einsatzelement (2) für ein Dentalimplantatsystem (5) nach einem der vorangehenden Ansprüche, wobei das Keramikimplantat (1) eine Ausnehmung (11) mit einer proximalen Öffnung (12) aufweist, wobei das Einsatzelement (2) in die Ausnehmung (11) einsetzbar oder eingesetzt ist und wobei das Einsatzelement (2) aus nicht keramischem Material gefertigt ist oder wobei das Einsatzelement (2) im Wesentlichen aus Spritzgusskeramik gefertigt ist und wobei das Einsatzelement (2) mit Strukturen (21) für eine Befestigung eines Abutments (3) am Einsatzelement (2) ausgerüstet ist, wobei das Einsatzelement (2) mittels einer gegenüber axialem Zug kraftschlüssigen und / oder formschlüssigen Verbindung in der Ausnehmung (11) des Keramikimplantates (1) mit dem Keramikimplantat (1) verbindbar ist oder verbunden ist, wobei die Ausnehmung einen Einsatzabschnitt (14) aufweist, welcher sich gegen distal konisch erweitert oder einen sich in distaler Richtung konisch erweiternden Teilabschnitt aufweist und durch diesen Hinterschnitt eine Verbindung zwischen dem Einsatzelement (2) und dem Keramikimplantat gegenüber axialem Zug bewirkt, und proximal des Einsatzbereichs einen proximalen Abschnitt (13) mit Strukturen aufweist, welche mit einem distalen Bereich des Abutments (2) zur Verdrehsicherung das am Keramikimplantat befestigten Abutments zusammenwirken..

12. Set (6) nach Anspruch 11, enthaltend ein Abutment (3) und eine Abutmentschraube (4) enthält, , welche in ein Innengewinde des Einsatzelements (2) einschraubbar ist, wobei ein Einschrauben der Abutmentschraube eine Spreizung des Einsatzelements bewirkt.

## Claims

1. A dental implant system (5) comprising a ceramic implant (1) and an abutment (3), wherein the ceramic implant (1) comprises a recess (11) with a proximal opening (12), said recess being designed as a blind hole and wherein the dental implant system (5) further comprises an insert element (2) which matches the recess (11), wherein the insert element (2) is manufactured of a non-ceramic material or wherein the insert element (2) is manufactured essentially of injection moulded ceramic and wherein the insert element (2) is provided with structures (21) for a fastening of the abutment (3) to the insert element (2), wherein the insert element (2) is connectable or connected to the ceramic implant (1) in the recess (11) of the ceramic implant (1) by way of a non-positive connection and/or positive-fit connection with respect to axial traction, **characterised in that** the recess comprises an insert section (14) which widens conically in the distal direction or which comprises a part-section widening conically in the distal direction and which by way of this undercut effects a connection between the insert element (2) and the ceramic implant with respect to axial traction and that the recess proximally of the insert region comprises a proximal section (13) with structures which interact with a distal region of the abutment (2) for the rotation lock of the abutment which is fastened to the ceramic implant.

2. The dental implant system (5) according to claim 1, wherein the insert element (2) is manufactured essentially of non-ceramic material and in particular of plastic or of metal.

3. The dental implant system (5) according to claim 2, wherein the insert element (2) is expandable and in the expanded condition is non-positively connected to the ceramic implant.

4. A dental implant system (5) according to claim 1, wherein the insert element (2) is manufactured essentially of injection moulded ceramic material.

5. The dental implant system (5) according to one of the claims 1 - 4, wherein the insert element (2) is connectable or connected in the recess (11) of the ceramic implant (11) with respect to axial traction, at least with a non-positive connection.

6. The dental implant system (5) according to one of the preceding claims, wherein the insert element is sleeve-like and is provided with an inner thread for an abutment screw (4) or for an outer thread on the distal region of the abutment (3).

7. The dental implant system (5) according to claim 3 and 6, wherein the expandable insert element (2) expands and non-positively connects to the ceramic implant (1) on rotating in the abutment screw (4).

8. The dental implant system (5) according to one of the preceding claims, wherein the dental implant system (5) comprises a spring element (27), wherein the spring element (27) is a separate part or a part which is connected to the insert element (2) and wherein the spring element (27) in connected state of the dental implant system (5) is non-positively connected to the ceramic implant (1) in the recess (11).

9. The dental implant system (5) according to one of the preceding claims 1 - 8, wherein the insert element (2) and/or an optional spring element (24) comprises a shape memory material.

10. The dental implant system (5) according to one of the preceding claims, wherein the insert element (2) is connected in the insert section (14) of the recess (11) of the ceramic implant (1) with respect to rotation forces additionally with a positive connection, in particular with a rotation lock.

11. A set (7) comprising a ceramic implant (1) and an insert element (2) for a dental implant system (5) according to one of the preceding claims, wherein the ceramic implant (1) comprises a recess (11) with a proximal opening (12), wherein the insert element (2) is insertable or inserted into the recess (11), and wherein the insert element (2) is manufactured from non-ceramic material or wherein the insert element (2) is manufactured essentially from injection moulded ceramic and wherein the insert element (2) is provided with structures (21) for a fastening of an abutment (3) to the insert element (2), wherein the insert element (2) is connectable or connected to the ceramic implant (1) in the recess (11) of the ceramic implant (1) by way of a non-positive connection and/or positive-fit connection with respect to axial traction, wherein the recess comprises an insert section (14) which widens conically in the distal direction or which comprises a part-section widening conically in the distal direction and which by way of this undercut effects a connection between the insert element (2) and the ceramic implant with respect to axial traction and proximally of the insert region comprises a proximal section (13) with structures which interact with a distal region of the abutment (2) for the rotation lock of the abutment which is fastened to the ceramic implant.

12. A set (6) according to claim 11, comprising an abutment (3) and an abutment screw (4) which can be screwed into an inner thread of the insert element (2), wherein a screwing-in of the abutment screw effects an expansion of the insert element.

## Revendications

1. Système (5) d'implant dentaire contenant un implant (1) en céramique et une butée (3), l'implant (1) en céramique présentant une découpe (11) configurée comme trou borgne et présentant une ouverture proximale (12),
le système (5) d'implant dentaire présentant en outre un élément d'insertion (2) adapté à la découpe (11),
l'élément d'insertion (2) étant réalisé en un matériau non céramique ou l'élément d'insertion (2) étant réalisé essentiellement en céramique moulée par injection,
l'élément d'insertion (2) étant doté de structures (21) permettant la fixation de la butée (3) sur l'élément d'insertion (2),
l'élément d'insertion (2) pouvant être relié ou étant relié à l'implant (1) en céramique au moyen d'une liaison en correspondance mécanique et/ou en correspondance géométrique résistant à la traction axiale dans la découpe (11) de l'implant (1) en céramique,
**caractérisé en ce que**
la découpe présente une partie d'insertion (14) qui s'évase coniquement dans la direction opposée à la direction distale ou une partie qui s'évase coniquement dans la direction distale, cette contre-dépouille ayant pour effet une liaison résistant à la traction axiale entre l'élément d'insertion (2) et l'implant en céramique et
**en ce que** la découpe présente en position proximale par rapport à la région de l'implant une partie proximale (13) dotée de structures qui coopèrent avec une partie distale de la butée (3) de manière à empêcher une rotation de la butée fixée sur l'implant en céramique.

2. Système (5) d'implant dentaire selon la revendication 1, dans lequel l'élément d'insertion (2) est réalisé essentiellement en matériau non céramique et en particulier en matière synthétique ou en métal.

3. Système (5) d'implant dentaire selon la revendication 2, dans lequel l'élément d'insertion (2) est expansible et est relié en correspondance mécanique à l'implant en céramique à l'état expansé.

4. Système (5) d'implant dentaire selon la revendication 1, dans lequel l'élément d'insertion (2) est réalisé essentiellement en matériau céramique moulé par injection.

5. Système (5) d'implant dentaire selon l'une des revendications 1 à 4, dans lequel l'élément d'insertion (2) peut être relié ou est relié dans la découpe (11) de l'implant (1) en céramique à l'implant (1) en céramique au moyen d'une liaison en correspondance mécanique résistant à la traction axiale.

6. Système (5) d'implant dentaire selon l'une des revendications précédentes, dans lequel l'élément d'insertion (2) a la forme d'une douille et est doté d'un filet intérieur pour une vis de butée (4) ou pour un filet extérieur prévu sur la partie distale de la butée (3).

7. Système (5) d'implant dentaire selon les revendications 3 et 6, dans lequel l'élément d'insertion (2) expansible se dilate lorsque la vis de butée (4) est serrée et se lie en correspondance mécanique à l'implant (1) en céramique.

8. Système (5) d'implant dentaire selon l'une des revendications précédentes, le système (5) d'implant dentaire contenant un élément élastique (27), l'élément d'insertion (2)7 étant une partie distincte ou une partie reliée à l'élément d'insertion (2), l'élément d'insertion (2)7 étant relié à l'implant (1) en céramique lorsque le système (5) d'implant dentaire est relié en correspondance mécanique de la découpe (11).

9. Système (5) d'implant dentaire selon l'une des revendications 1 à 8, dans lequel l'élément d'insertion (2) et/ou un élément élastique facultatif (24) contiennent un matériau à mémoire de forme.

10. Système (5) d'implant dentaire selon l'une des revendications 1 à 8, dans lequel l'élément d'insertion (2) est en outre relié de manière à résister aux forces de rotation à une liaison en correspondance géométrique, en particulier à un blocage anti-rotation dans la partie d'insertion (14) de la découpe (11) de l'implant (1) en céramique.

11. Trousse (7) contenant un implant (1) en céramique et un élément d'insertion (2) pour un système (5) d'implant dentaire selon l'une des revendications précédentes, l'implant (1) en céramique présentant une découpe (11) dotée d'une ouverture proximale (12), l'élément d'insertion (2) pouvant être inséré ou étant inséré dans la découpe (11) et l'élément d'insertion (2) étant réalisé en un matériau non céramique ou l'élément d'insertion (2) étant réalisé essentiellement en céramique moulée par injection, l'élément d'insertion (2) étant doté de structures (21) permettant la fixation de la butée (3) sur l'élément d'insertion (2), l'élément d'insertion (2) pouvant être relié ou étant relié à l'implant (1) en céramique au moyen d'une liaison en correspondance mécanique et/ou en correspondance géométrique résistant à la traction axiale dans la découpe (11) de l'implant (1) en céramique, la découpe présentant une partie d'insertion (14) qui s'évase coniquement dans la direction opposée à la direction distale ou une partie qui s'évase coniquement dans la direction distale, cette contre-dépouille ayant pour effet une liaison résistant à la traction axiale entre l'élément d'insertion (2) et l'implant en céramique et la découpe présentant en position proximale par rapport à la région de l'implant une partie proximale (13) dotée de structures qui coopèrent avec une partie distale de la butée (3) de manière à empêcher une rotation de la butée fixée sur l'implant en céramique.

12. Trousse (7) selon la revendication 11, contenant une butée (3) et une vis de butée (4) qui peut être vissée dans un filet intérieur de l'élément d'insertion (2), le vissage de la vis de butée ayant pour effet une expansion de l'élément d'insertion.
